# EUROPEAN PATENT APPLICATION

(11) **EP 2 184 155 A1**
(43) Date of publication of application: **12.05.2010**
(21) Application number: 09174848.3
(22) Date of filing: 03.11.2009
(51) Int. Cl.: B29C 45/36, B29D 23/20

(54) **A mould for injection moulding of tubes having slim walls and being made of plastic.**

(30) Priority: 07.11.2008 IT MO20080283
(71) Applicant: GIFLOR S.R.L., 36040 Grumolo delle Abbadesse VI (IT)
(72) Inventor: Morini, Emilio, 43052, Colorno (Parma) (IT)
(74) Representative: Colò, Chiara

(57) **Abstract**

The invention relates to a mould for injecting tubes having slim walls made of a plastic material. The mould, destined to make tubes (20) having an outlet mouth (21) for a product and a lateral wall (22) delimiting the space destined to contain the product to be packed, comprises an upper punch (1) and a lower punch (2) which are inserted in an external body (3, 3a) or matrix of the mould to define the space to be filled with the injected plastic material; the upper punch comprises a projection (1a) which occupies the internal part of the outlet mouth (21) and extends below the lower end of the mouth (21); the lower punch (2) comprises a cavity (2a) internally of which the projection (1a) is inserted; injection channels (4) are afforded between the projection and the cavity, which channels flow into a single injection manifold (5) are reach inlet points to a space of the mould destined to receive the injected material.

## Description

The present invention relates to a mould for injecting tubes with slim walls in plastic material. In particular, reference is made to realization, by injection, of tubes destined to contain cosmetic products and for personal hygiene, pharmaceuticals, and more in general fluid or liquid products. These tubes are normally provided with an upper part, on which the outlet mouth of the product is afforded, and a lateral wall, generally cylindrical, which is destined to delimit at least a part of the space destined to contain the product to be packed. The wall, which in the most recent realizations to which particular reference is made, is integrally injected together with the upper part, and is open at a bottom thereof in order to enable introduction of the product during the stage of packing. The upper part of the tube is normally closed with a cap or cover of various types, while the bottom of the lateral wall is normally heat-welded to close the pack after introduction of the product.

The moulds destined to realize these tubes normally comprise, among the other pieces, an upper punch and a lower punch (which according to the type of the tube to be moulded can each be realized in one or more parts) which are inserted internally of an external body or matrix of the mould, also made in one or more parts, and brought together to define, with the matrix, a space conformed like the tube which is to be realized, which space is filled by the plastic material injected internally of the mould during the moulding stage. In order to avoid that during injection the punches might be subject even to small reciprocal movements, which would lead to unacceptable variations in the thicknesses, which are generally very small, of the tube during the moulding operation, jointing systems are used which enable contact between the upper punch and the lower punch and the reciprocal fastening thereof. Obviously these jointing systems are realized in zones which are not involved in the formation of the tube being moulded as there is no space between them and therefore there is no intrusion of the injected material.

In order to have the most uniform possible introduction of the material injected into the mould, several points or channels of injection are used which take the fluid material to be injected to various points of the tube being moulded. Once the stage of injection has been terminated, the material remaining in the injection channels (in the case of injection known as cold injection) and which solidifies together with the material destined to constitute the walls of the moulded tube has to be removed from the tube, generally with a mechanical-type action.

Following this, or in the case of a hot-injection in which there is a detachment of the injection points from the tube on opening the mould, it often happens that traces of the point of attachment remain on the tube, between the tub and the injection points or channels; these imperfections of the surface of the realized tube can cause some drawbacks, in particular if left on surfaces destined to ensure a degree of seal of the product using the tube obtained.

In this context, the technical task underpinning the present invention is to provide a mould for rationalizing the construction of tubes of plastic material which obviates the drawbacks of the prior art as mentioned above.

An advantage of the present invention is that it provides a mould which eliminates the need for any finishing operations following the injection of the tube being moulded.

The set technical task and the preset aims are substantially attained by the mould comprising the technical characteristics set out in one or more of the accompanying claims.

Further characteristics and advantages of the present invention will better emerge from the non-limiting description that follows of a preferred though non-exclusive embodiment of the mould of the invention, as illustrated in the accompanying figures of the drawings, in which:

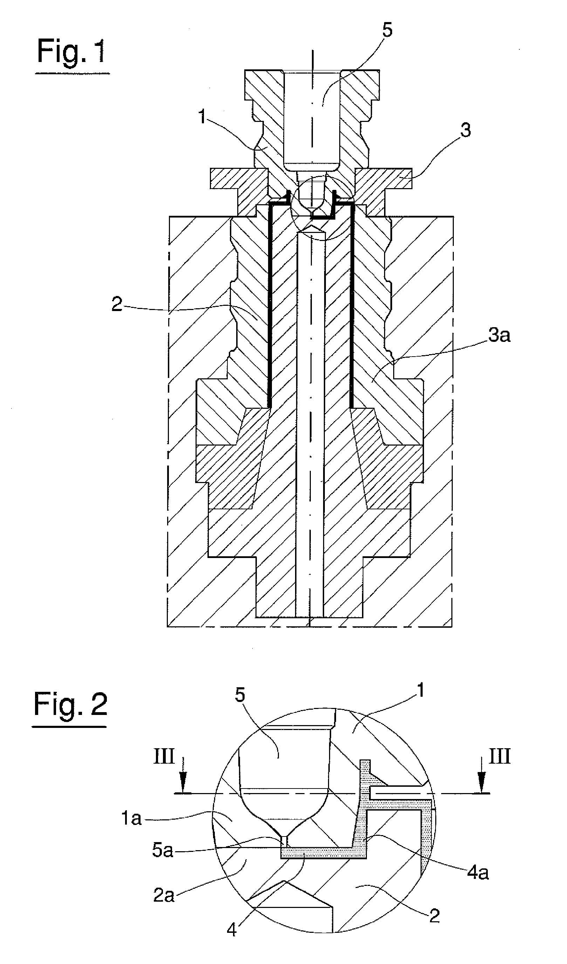

figure 1 is a vertical elevation section of a mould of the type of the invention;
figure 2 is an enlarged-scale illustration of a detail of figure 1;
figure 3 is a section, made according to plane III-III, of the mould of figure 1;
figure 4 is a perspective view, with some parts removed better to evidence other, of the zone relating to the mouth of a tube obtained with the mould of the invention.

It is stressed that in describing the closed mould reference will be made to the space destined to house the injected material as if the space were occupied by the tube during moulding; if not differently specified, the elements of the tube are therefore in reality represented by the spaces destined to be filled in order to realize the elements.

The mould of the invention is used for injecting plastic material destined to mould tubes 20, of various shapes and sizes. The tubes are of a type provided with an upper part on which an outlet mouth 21 for the product is fashioned, and a lateral wall 22 destined to delimit at least a part of the space destined to contain the product, normally fluid or liquid, to be packed. The parts of the tubes and in particular the lateral wall which must be deformable in order to cause the exit of the product contained in the tube are generally slim; for the lateral walls, the usual thicknesses are below one millimetre, generally in the order of 0.5 millimetres; for the upper part, where the outlet mouth is fashioned, which has to be sturdier, the thicknesses are above those of the lateral wall and are normally comprised between 1 and 2 millimetres.

The mould in object comprises at least an upper punch 1 and a lower punch 2 which are inserted into an external body of the mould, respectively an upper outer body 3 and a lower outer body 3a, the upper punch 1 and lower punch 2 being brought together to define, with the outer body, a space which is filled with the plastic material injected into the mould during moulding; both the upper punch 1 and the lower punch 2 are normally, as also happens with known moulds, fixed to the mould at ends thereof which are not brought into contact with one another. As also happens with known-type moulds, these elements can be realized in one or more pieces which can be reciprocally mobile and which are assembled with various movements on closure of the mould prior to injection, according to the conformation of the tube which is to be obtained.

In the mould of the invention, the upper punch 1 comprises a projection 1a which, with the mould closed, occupies the internal part of the outlet mouth 20 of the tube to be moulded and extends to below the lower end of the mouth. A cavity 2a is afforded in the lower punch 2, internally of which, with the mould closed, the projection 1a is inserted. Both the projection 1a and the cavity 2a are preferably truncoconical and, on closure of the mould, are brought into contact with one another in the zone below the mouth 21 both on the bottom wall of the cavity 2a and on the lateral wall of the cavity 2a; this enables the upper punch 1 and the lower punch 2 to be exactly positioned with reference to the external bodies 3 and 3a of the mould and between themselves, such as to exactly define the space destined to contain the fluid injected during the injection stage.

A plurality of injection channels 4 is afforded between the lower surface of the projection 1a and the bottom surface of the cavity 2a, which injection channels 4 meet at a position of a single injection manifold 5, afforded internally of the upper punch 1; the injection manifold 5 is preferably afforded coaxially of the projection 1a and exhibits a section 5a that is very considerably smaller than the other sections of the injection manifold 5, into which section 5a the injection channels 4 reach. The injection channels 4 are preferably arranged in a spoke-fashion and are reciprocally radially equidistanced; in the embodiment illustrated in the figures three injection channels 4 are represented which are arranged radially among themselves at 120° steps. It is noteworthy that, especially if large-size tubes are to be realized, with large mouths, the channels can be greater in number than what is illustrated in the figures.

As mentioned, an end of the channels 4 flows into the manifold 5; the other ends of the channels 4 each extend into the space of the mould which is destined to contain the injected material; in particular this is achieved via lateral channels 4a which are afforded between the lateral surfaces in contact with the projection 1a and the cavity 2a and which reach the space of the mould destined to house the injected material at points located at the lower end of the part of the tube which delimits the mouth 21 of the tube. Very briefly, these channels are L-shaped and are arranged below the mouth 21 internally of the space of the tube destined to receive the product to be packed.

Once closed, the mould of the invention exhibits the upper and lower punches which, thanks to the presence of the projection 1a and the cavity 2a constituting a sort of joint between the two punches, are solidly fixed to one another and are positioned precisely and stably in relation to the external bodies of the mould. The space created internally of the mould, which is destined to receive the material for realizing the tube, is thus exactly and solidly defined and does not undergo modifications, even during the stage of injection, which is performed at considerable pressures, which in at least some of the injection moulds might cause slight displacements of the punches with a consequent variation in the thickness of the tube obtained. In the mould of the invention, the injected fluid enters through a single manifold, a fact which makes both the construction and the use of the mould easier; the fluid distributes through a plurality of channels, which makes the injection operation more uniform and more rapid.

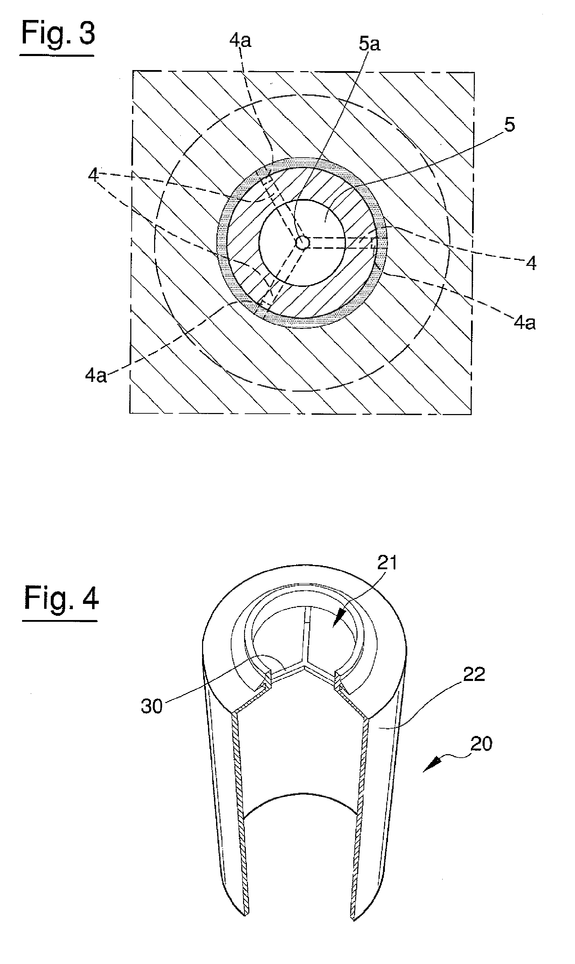

It is worth noting that the injection channels are in truth internal spaces in the mould which are filled with the injected fluid, and that when the mould is opened they will become part of the tube represented by the slim L-shaped strips 30 illustrated in figure 4; the positioning and conformation of the injection channels are however such as to give rise to parts of the tube (the strips 30) which are positioned in a zone which causes no drawback either in terms of seal nor any other type, in the use of the tube, and which therefore do not have to be removed. Also, the detachment between the channels 4 and the manifold 5, which occurs on opening the mould and which can leave some imperfections on the tube, does not represent any problem as any probable imperfection is located at a point of the tube which is at the point of connection between the manifold and the channels 4 and which has no function, and which therefore can exhibit the imperfection with no negative consequences.

The mould of the invention thus contemporaneously exhibits the advantages of: having a correct and stable positioning of the parts making up the mould; having a single point of inlet for the injected fluid; having a correct, balanced and rapid distribution of the fluid during the injection stage; enabling a tube having an external surface free of imperfections to be obtained; obtaining a tube which does not require any working to be done when it exits the mould.

## Claims

1. A mould for injection moulding of tubes (20) having slim walls and being made of plastic, of a type which is suitable for realizing tubes (20) provided with an upper part on which an outlet mouth (21) for a product is afforded, as well as a lateral wall (22) destined to delimit at least a part of a space destined to contain the product to be packed, the mould comprising at least an upper punch (1) and a lower punch (2) which are inserted in an outer body (3, 3a) of the mould and which are reciprocally brought together to define, together with the outer body, a space which is filled by a plastic material injected internally of the mould during a moulding stage, **characterised in that**: the upper punch (1) comprises a projection (1a) which occupies an internal part of the outlet mouth (21) of the tube to be moulded and extends below a lower end of the mouth; the lower punch (2) comprises a cavity (2a) internally of which the projection (1a) inserts; the projection (1a) and a bottom of the cavity (2a) are in reciprocal contact in a zone beneath the mouth (21), on a bottom wall and a lateral wall of the cavity (2a); a plurality of injection channels (4) is afforded between the lower surface of the projection (1a) and the bottom surface of the cavity (2a), which plurality of injection channels meet at a position corresponding to a single injection manifold afforded internally of the upper punch (1); the injection channels (4) each reach an inlet point to a space of the mould destined to receive injected material through lateral channels (4a) afforded between lateral surfaces in contact with the projection (1a) and the cavity (2a).

2. The mould of claim 1, **characterised in that**: the projection (1a) and the cavity (2a) have a truncoconical shape; the injection manifold (5) is fashioned coaxially of the projection (1a) and exhibits a section (5a) which is very small with respect to other sections of the injection manifold (5), to which the injection channels extend (4).

3. The mould of claim 2, **characterised in that** the injection channels (4) are arranged reciprocally radially equidistanced.

4. The mould of claim 2, **characterised in that** it comprises three injection channels (4) arranged radially equidistanced.
